# FASCICULE DE BREVET EUROPEEN

(11) **EP 1 406 938 B1**
(45) Date de publication et mention de la délivrance du brevet: **21.04.2010**
(21) Numéro de dépôt: 02760377.8
(22) Date de dépôt: 03.07.2002
(51) Int. Cl.: C08G 18/00, C08G 18/10, C08G 18/22, C08G 18/34

(54) **COMPOSITION POLYCONDENSABLE COMPORTANT UN HETEROCYCLE OXYGENE ET UN ISOCYANATE, ET PROCEDE DE POLYCONDENSATION Y AFFERANT**
POLYKONDENSIERBARE ZUSAMMENSETZUNG DIE EINE SAUERSTOFF ENTHALTENDE HETEROZYKLISCHE VERBINDUNG UND EIN ISOCYANAT ENTHÄLT UND VERFAHREN ZUR POLYKONDENSATION
POLYCONDENSABLE COMPOSITION COMPRISING AN OXYGEN HETEROCYCLE AND AN ISOCYANATE, AND POLYCONDENSATION ASSOCIATED THEREWITH

(30) Priorité: 05.07.2001 FR 0108942
(43) Date de publication de la demande: 14.04.2004
(73) Titulaire: Perstorp France, 69800 Saint-Priest (FR)
(72) Inventeur: BERNARD, Jean-Marie, 69440 Mornant (FR)
(74) Mandataire: Lavé, Stéphanie
(86) Numéro de dépôt international: PCT/FR2002/002320
(87) Numéro de publication internationale: WO 2003/004544

(56) Documents cités:
- EP-A- 0 485 008
- FR-A- 2 779 142
- US-A- 4 162 357

## Description

La présente invention a pour objet un nouveau type de composition polycondensable et son procédé de polycondensation.

Elle a plus particulièrement pour objet une composition polycondensable qui met en jeu deux types de polycondensation, voire plus ; une par ouverture de cycle oxygéné et une condensation mettant en jeu des isocyanates avantageusement aliphatiques.

Habituellement, dans la synthèse des composés formant des polyuréthannes, on commence par faire un prépolymère présentant des fonctions alcooliques et, d'autre part, l'on fait un prépolymère à partir de polyisocyanates, en général diisocyanates, tels que le bluret, les allophanates, les trimères.

EP 0 485 008 décrit une composition utile à titre de revêtement et comprenant :
(a) au moins un prépolymére ayant des fonctions isocyanate, préparé par une réaction entre un composé contenant des hydrogènes actifs et un (poly)isocyanate, ledit prépolymère ayant un ratio de groupes-NCO par rapport aux groupes comprenant un hydrogène actif inférieur ou égal à 5 et par un point de ramollissement compris entre +30 et +200°C ;
(b) au moins un poly-époxide comprenant un ratio d'environ 0,01 à environ 100 équivalents de poly-époxide pour chaque équivalent de prépolymère ayant des fonctions isocyanate ;
(c) au moins un catalyseur catalysant la trimérisation des isocyanates et l'homopolymérisation d'époxides, et, éventuellement,
(d) des additifs et/ou modificateurs non-réactifs.

Au cours de l'étude qui a mené à la présente invention, il a pu être montré qu'il était possible de réaliser simultanément deux types de condensations, une condensation d'hétérocycle oxygéné et une condensation d'isocyanates.

De telles compositions présentent l'avantage d'être extrêmement fluides lors du mélange et avant le polycondensation. Cet avantage permet notamment d'abaisser le niveau de solvant dont l'usage est de moins en moins recommandé en raison des risques de tous ordres, en raison de leur inflammabilité et, pour certains d'entre aux, de leur chronotoxicité.

En outre, une telle technique permet d'avoir des polymères plus homogènes que ceux qui sont fabriqués selon les voles classiques.

Ainsi, la présente invention vise à trouver une composition qui soit susceptible de réaliser dans un seul milieu, sans que l'on sache s'il s'agit de réactions successives ou simultanées, deux types au moins de polycondensations, dont l'une met en oeuvre une polycondensation polymérisation par ouverture d'un hétérocycle oxygéné et l'autre met en oeuvre des fonctions isocyanates.

Un autre but de la présente invention est de fournir des compositions qui nécessitent moins de solvant lors de leur mise en oeuvre.

Un autre but de la présente invention est de fournir une composition qui permette une grande homogénéité des composants et une répartition harmonieuse des noeuds de réticulation lorsqu'ils existent.

Ainsi, une composition, notamment utile pour revêtements, qui comporte pour addition successive ou simultanée :
a) une sous-composition isocyanate porteuse de fonctions isocyanates libres de nature aliphatique ou cycloaliphatique ;
b) une sous-composition alcoolique comportant au moins un diol ;
c) au moins un monomère porteur d'une fonction lactone ;
d) un catalyseur de nature basique susceptible de dimériser ou de trimériser le motif isocyanate est décrite.

La composition peut comporter les diluants connus de l'homme de métier mais il est préférable que ces derniers représentent en masse au plus 100%, avantageusement au plus 50%, de préférence 1/3 de la somme des sous compositions a) à d).

La composition alcoolique peut être réalisée in situ par le mélange de précurseurs dont le mélange est alcoogène ; par exemple, un mélange d'époxyde et d'eau peut jouer le rôle de diol. Il convient toutefois de signaler que cette possibilité n'est pas l'une des possibilités préférées.

Les monomères (c) sont choisis essentiellement parmi les hétérocycles oxygénés que constituent les fonctions lactone allant de 4 à 7 chaînons.

Le catalyseur de nature basique est un catalyseur correspondant à une base forte obtenue par neutralisation d'un acide très faible. Il est avantageux que ces anions correspondent à une basicité au moins égale à celle d'un alcoolate primaire. En d'autres termes, on peut Indiquer que la basicité correspondant à l'anion, pris isolément, correspond au sel d'un acide de pKa au moins égal à 14, avantageusement à 15.

L'atome porteur de la charge anionique est avantageusement un oxygène ou un azote.

Ainsi, on peut citer comme anions entrant dans la nature basique du catalyseur (d), les alcoolates, les amidures, les imidures, et notamment les sels de disilazane (tels que ceux de l'HMDZ). Il convient enfin de mentionner qu'il est possible de réaliser in situ des bases de cette nature en ajoutant des ions fluorure et des dérivés silylés sur un azote ou un oxygène.

Les co-cations des catalyseurs basiques sont en général soit des cations ammonium, avantageusement quaternaires, soit des cations phosphonium, avantageusement quaternaires, soit des cations métalliques.

Parmi les cations métalliques, il convient de choisir les cations polyvalents afin de ne pas trop emballer la réaction. Les monovalents peuvent certes donner de bons résultats mais leur manipulation est un peu plus délicate.

Parmi les métaux polyvalents préférés, on peut notamment citer les cations correspondant aux terres rares, avantageusement les cations correspondant au niveau le plus stable desdites terres rares, ainsi on évitera des cations de valence 4, notamment du cérium.

D'une manière générale, on préfère utiliser des cations n'ayant qu'un seul état de valence stable dans les conditions opératoires.

Rappelons que les terres rares comportent les éléments suivants: le scandium, l'yttrium, le lanthane ainsi que les lanthanides (cérium, praséodyme, néodyme, samarium, europium, gadolinium, terbium, ytterbium et lutécium). Il est possible d'utiliser un mélange de terres rares entre elles ou avec d'autres cations.

Il est également possible d'utiliser plusieurs anions basiques, toutefois, il est plus aisé de n'utiliser qu'une seule catalyse basique, et donc qu'un seul anion, par exemple n'introduire qu'un seul alcoolate.

La fonction basique et notamment alcoolate peut être introduite telle quelle ou formée in situ. Elle peut notamment être formée in situ par l'arrachement d'un hydrogène alcoolique sur un alcool, y compris un polyol ou des alcools portant une fonction inerte, ou indifférente, dans le processus de polycondensation dans les conditions opératoires telles que par exemple les fonctions éthers (on peut citer comme exemple de ces alcools le produit de mono ou de polycondensation d'un alcool sur des époxydes). Les alcoolates peuvent bien sûr être issus de l'arrachement de protons sur les alcools de ladite sous-composition alcoolique comportant au moins un diol, ou de polyol en cours de constitution. Cet arrachement peut être réalisé par tout moyen, notamment avec des hydrures, voire avec des amidures.

Les alcoolates employés comme élément du catalyseur d) peuvent avoir un grand nombre de carbones, nombre qui n'est pas critique, mais l'on utilise le plus souvent des alcoolates légers et notamment des méthylates, éthylates propylates et butylates, des alcoolates porteurs d'autre(s) fonction(s) inertes ou indifférentes (par exemple éther de glycol), des éléments et cations précités, donnent des résultats satisfaisant. Les alcoolates correspondant aux diols, lesquels sont formés in situ, donnent également satisfaction comme le démontre les bons résultats de l'invention.

En cas de réaction paresseuse, on préfère les groupes alcoolates relativement basiques et notamment ceux qui sont issus des alcools dans lesquels la fonction OH est portée par un carbone tertiaire ou secondaire. On peut citer plus particulièrement les alcoolates et notamment les isopropylates, en particulier, l'isopropylate des éléments de terres rares, yttrium, samarium, ytterbium et lanthane.

Les sels d'hexaméthyldisilazane et notamment les sels des terres rares, avec les mêmes préférences que celles qui sont mentionnées ci-dessus pour les alcoolates, donnent de très bons résultats.

Selon la présente invention, la sous-composition isocyanate (a) est le plus souvent constituée de molécules porteuses de fonctions isocyanates avec un nombre de fonctions isocyanates moyen allant de 2 à 5, avantageusement compris entre 2 et 3, 5, de préférence de 2 à 3, et plus préférentiellement de 2 à 2,5 fonctions isocyanates par molécule.

Ces molécules sont avantageusement choisies parmi les compositions comportant un taux élevé de diisocyanates connus dans la profession sous le terme de monomères.

Mais ces sous-compositions peuvent aussi comporter comme composants majoritaires, ou fortement minoritaires, c'est-à-dire à une concentration au moins égale à 5%, de préférence au moins égale à 10% en masse dans la sous-composition, les condensats légers tels que les dimères et les allophanates desdits monomères.

Toutefois, ces compositions peuvent comporter jusqu'à 30% en poids, de préférence jusqu'à 20% en poids, plus préférentiellement jusqu'à 10% en poids, de composés plus lourds, notamment les polycondensats tels que les trimères et les biurets.

Il est toutefois préférable que la viscosité soit inférieure à 800 mPa.s (800 centipoises), de préférence à 500 mPa.s (500 centipoises) à savoir les composés comportant au moins deux fonctions isocyanates et comportant un enchaînement (CH₂)_{π} où π représente un entier de 2 à 20, de préférence 2 à 10 avantageusement de 2 à 4.

Lorsque π est au moins égal à 4 et à condition que deux fonctions isocyanates soient séparées par le chemin le plus court par au moins 2 atomes de carbone aliphatique, on peut également viser les isomères de ces polyméthylènediisocyanates d'isomères qui sont des diisocyanates comportant une chaîne latérale saturée greffée en α ou β d'une fonction isocyanate.

Si l'on revient aux diisocyanates, qu'ils soient monomères ou oligomères, il convient de préciser que, quand il y a plusieurs enchaînements, ces derniers peuvent être semblables ou différents (il s'agit d'enchaînements polyméthylène). En outre, il est souhaitable que l'un au moins, de préférence tous ces enchaînements polyméthylène, soient libres et donc exocycliques.

Les exemples préférés de polyméthylènediisocyanate sont le TMDI (tétraméthylènediisocyanate), l'HDI (hexaméthylènediisocyanate) et le MPDI (2-méthylpentanediisocyanate) ainsi que les 3,3,5- ou 3,5,5-triméthylhexaméthylènediisocyanate.

Il convient de mentionner que les monomères porteurs de trois fonctions isocyanates peuvent être utilisés dans le cadre de la présente invention, parmi ces composés on peut notamment citer l'isocyanatométhyloctaméthylènedisocyanate (généralement connu sous le sigle TTI) et la lysine triisocyanate (généralement connue sous l'acronyme LTI).

En cas de mélanges obtenus à partir de plusieurs (en général deux) types de monomères, il est préférable que celui, ou ceux, des monomères qui réponde(nt) aux conditions ci-dessus et notamment à la condition sur la présence d'enchaînements polyméthylène (CH₂)ₙ, porte(nt) au moins un 1/3, avantageusement un 1/2, de préférence 2/3, des fonctions isocyanates.

Une autre famille de monomères isocyanates convient également particulièrement bien pour l'invention. Il s'agit de monomères dits cycloaliphatiques, c'est-à-dire ceux dont le squelette comporte un cycle aliphatique.

Ces monomères sont avantageusement tels qu'au moins l'une, avantageusement les deux fonctions isocyanates, soit distante(s) du cycle le plus proche, d'au plus un carbone, et de préférence reliée directement à lui. En outre, ces monomères cycloaliphatiques présentent avantageusement au moins une, de préférence deux fonctions isocyanates choisies parmi les fonctions isocyanates secondaires, tertiaires ou néopentyliques.

De bons résultats sont obtenus quand la liberté conformationnelle du monomère cycloaliphatique est faible. Comme monomères susceptibles de donner de bons résultats, on peut citer à titre d'exemples les monomères suivants: les composés correspondant à l'hydrogénation du ou des noyaux aromatiques porteurs des fonctions isocyanates de monomères d'isocyanates aromatiques et notamment du TDI (toluylènediisocyanate, souvent désigné par toluènediisocyanate) aussi désigné sous le sigle H₆TDI et des diisocyanatobiphénylméthyles (appelé H₁₂MDI).

Rappelons que les monomères de nature cycloaliphatique sont utilisés pour donner des monomères relativement rigides, alors que les isocyanates de nature simplement aliphatique, c'est-à-dire ceux qui comportent des fragments polyméthylène tels que définis ci-dessus, donnent une souplesse élevée au système.

Si l'on revient aux cycloaliphatiques diisocyanates préférés, on peut notamment citer (liste non exhaustive) :
- les divers BIC [bis(isocyanatométhylcyclohexane)] ;
- et le norbornanediisocyanate, souvent appelé par son sigle NBDI ;
- l'isophoronediisocyanate ou IPDI, ou plus précisément le 3-isocyanatométhyl-3,5,5-triméthylcyclohexylisocyanate ;
- le H₁₂MDI (1,1-Méthylène bis-4,4-isocyanatocyclohexane).

Souvent on définit la quantité de catalyseur par rapport à la quantité d'isocyanates initiale. Ainsi, avantageusement, on ajoute le catalyseur suivant l'invention en une quantité comprise entre 0,01% et 20%, de préférence entre 0, 1 % et 5% en poids par rapport au poids total des isocyanates de départ.

Le catalyseur est en général ajouté en dernier au milieu réactionnel sous agitation et, une fois son addition réalisée, on porte le mélange réactionnel à la température choisie pour la polycondensation, température qui est, en général, comprise entre 30 et 150°C suivant ce que l'on désire, plus généralement entre 40 et 90°C. Des cuissons à cinétiques élevées sous des températures élevées, 150 à 250°C, peuvent aussi être réalisées.

La durée de la réaction dépend bien évidemment de la température choisie.

Il convient de signaler que ce type de composition permet de réaliser des polymères, réticulés ou non, et de taille molécule variable suivant les proportions des divers composés.

Le rapport entre les fonctions lactone et les fonctions alcooliques définit la longueur de chaîne polyoxygénée issue de la polycondensation de la lactone.

Le rapport entre les fonctions alcooliques et les fonctions isocyanates définit le nombre de noeuds induisant une réticulation.

Ces noeuds peuvent être de plusieurs natures. Ils sont le plus souvent des noeuds issus de la trimérisation de fonctions isocyanates mais ils peuvent également être réalisés par des fonctions allophanates sur des polyols et notamment les diols.

Il convient enfin de signaler que les fonctions dimères permettent de donner in situ à la place de la fonction dimère une fonction allophanate constitutive d'un noeud.

Pour favoriser la formation de noeuds le rapport des fonctions isocyanates sur le rapport des fonctions alcooliques est avantageusement au moins égal à 0,9, de préférence à 1, et plus préférentiellement à 1,2.

La valeur supérieure peut se situer aux alentours de 2.

On peut également, si l'on désire améliorer le taux de réticulation, augmenter la teneur en dimères Dans ce cas, il est préférable que la sous-composition isocyanate soit telle qu'au moins 10% des fonctions isocyanates soit portées par des dimères (fonction uréthinedione) de monomères diisocyanates.

Ainsi, si l'on résume ces contraintes relatives aux diisocyanates, on peut indiquer que, lorsque la composition isocyanate comporte des fonctions qui ne sont pas aliphatiques lato sensu, c'est-à-dire lorsqu'elle comporte des fonctions aromatiques, il est préférable qu'au moins 60% des fonctions isocyanates, avantageusement au moins 80%, de préférence la totalité des fonctions isocyanates soient de nature aliphatique.

Pour que la présente invention présente un intérêt par rapport aux autres techniques existantes dans l'état de l'art, il est préférable que la composition, ou plus exactement la sous-composition isocyanate, comporte au moins 80% des fonctions isocyanates sous la forme de molécules porteuses de deux fonctions isocyanates, avantageusement au moins 90%.

Enfin, pour obtenir une longueur de chaîne issue de la polycondensation des hétérocycles oxygénés qu'ils soient éther cyclique ou lactone, il est préférable que le rapport éther cyclique et/ou lactone sur fonction alcool (fonction cyclique/fonction OH) soit au moins égal au rapport obtenu en divisant 500 par la masse moléculaire du monomère, ou lorsqu'il y a plusieurs hétérocycles oxygénés par la masse moléculaire moyenne du mélange de monomères (c'est-à-dire la masse totale de monomères divisée par le nombre de molécules).

Ces calculs sont faciles à réaliser en raison du faible nombre de monomères dont on maîtrise les proportions.

Au cours de l'étude de la réaction de trimérisation de l'isophorone-diisocyanate (IPDI) catalysée par les alcoolates de terres rares, il a été observé aux côtés des structures isocyanurates attendues la formation de structures allophanates de l'isocyanate et de l'alcool ligand de l'alcoolate métallique.

Quand l'alcoolate est formulé dans un monoalcool, on observe, à côté des produits mentionnés ci-dessus, l'allophanate de l'isocyanate et de l'alcool de formulation.

Nous avons montré qu'il est possible d'obtenir un réseau polyuréthanne directement à partir des composants monomères de départ en utilisant un composé portant au moins une fonction isocyanate, un composé portant au moins une fonction alcool ou précurseur d'une fonction alcool et un alcoolate métallique plus particulièrement de terres rares.

Le ratio fonction isocyanate/alcool est un critère important si l'on cherche à avoir un réseau plus ou moins dense.

Il est donc préférable que l'on ait un ratio NCO/OH supérieur à 1 pour avoir un réseau polyuréthanne.

L'exemple ci-dessous illustre l'invention :

### Exemple - Synthèse d'un réseau polyuréthanne obtenu par réaction de l'IPDI et de caprolactone monomère

Dans un réacteur de 100 ml agité, on ajoute successivement 5,13g de caprolactone monomère (0,045 mol) et 0,1 g de tris(méthoxyéthylate) de lanthane, 0,45 g de 1,4 butanediol (0,005 mol) et 10g d'IPDI (0,045 mol). Le ratio NCO/OH est au moins égal à 2.

Après 4h à 70°C, l'analyse infrarouge du milieu réactionnel gélifié permet d'identifier les bandes isocyanurates, esters, isocyanates, carbamates et allophanates. L'ensemble de ces bandes indique bien la formation d'un réseau polyuréthanne.

## Revendications

1. Composition utile pour revêtement, **caractérisée par le fait qu'**elle comporte pour addition successive ou simultanée :
(a) une sous composition isocyanate porteuse de fonction isocyanate libre de nature aliphatique ou cycloaliphatique ;
(b) une sous composition alcoolique comportant au moins un diol ;
(c) au moins un monomère porteur d'une fonction lactone ;
(d) un catalyseur de nature basique susceptible de dimériser et/ou de trimériser le motif isocyanate,
le rapport des fonctions isocyanates sur les fonctions alcooliques est au moins égal à 0,9.

2. Composition selon la revendication 1, **caractérisée par le fait que** la composition isocyanate comporte au moins 80% des fonctions isocyanates sous la forme de molécule porteuse de deux fonctions isocyanates, avantageusement au moins 90%.

3. Composition selon les revendications 1 et 2, **caractérisée par le fait qu'**au moins 10% des fonctions isocyanates est porté par des dimères de monomère diisocyanate.

4. Composition selon les revendications 1 à 3, **caractérisée par le fait que** le rapport en équivalent entre, d'une part les fonctions lactone et, d'autre part les fonctions alcools, est au moins égal au rapport obtenu en divisant 500 par la masse moléculaire du monomère ou, lorsqu'il y en a plusieurs, la masse moléculaire moyenne du mélange de monomère.

5. Composition selon les revendications 1 à 4, **caractérisée par le fait que** le rapport en équivalent entre les fonctions lactone et les fonctions alcools est au moins égal à 10.

6. Procédé de polycondensation **caractérisé par le fait que** l'on soumet une composition selon les revendications 1 à 5 à un chauffage à une température comprise entre l'ambiante et 100°C.

## Claims

1. Composition useful for coating applications, **characterised in that** it comprises the following for successive or simultaneous addition:
(a) an isocyanate sub-composition bearing a free aliphatic or cylcoaliphatic isocyanate group;
(b) an alcohol sub-composition comprising at least one diol;
(c) at least one monomer bearing a lactone group;
(d) a basic catalyst capable of dimerising and/or trimerising the isocyanate unit,
the ratio of the isocyanate groups to the alcohol groups is at least equal to 0.9.

2. Composition according to claim 1, **characterised in that** the isocyanate composition comprises at least 80% of the isocyanate groups in the form of a molecule bearing two isocyanate groups, advantageously at least 90%.

3. Composition according to claims 1 and 2, **characterised in that** at least 10% of the isocyanate groups are borne by dimers of diisocyanate monomer.

4. Composition according to claims 1 to 3, **characterised in that** the equivalent ratio between the lactone groups on one hand and the alcohol groups on the other hand, is at least equal to the ratio obtained by dividing 500 by the molecular mass of the monomer or, where there is a plurality of these, the average molecular mass of the monomer mixture.

5. Composition according to claims 1 to 4, **characterised in that** the equivalent ratio between the lactone groups and the alcohol groups is at least equal to 10.

6. Polycondensation method **characterised in that** a composition according to claims 1 to 5 is subjected to heating at a temperature comprised between ambient temperature and 100°C.

## Patentansprüche

1. Zusammensetzung für Beschichtungen, **dadurch gekennzeichnet, dass** sie für die aufeinanderfolgende oder gleichzeitige Zugabe umfasst:
(a) eine Isocyanat-Teilzusammensetzung, welche freie Isocyanatfunktionen aliphatischer oder cycloaliphatischer Natur trägt;
(b) eine alkoholische Teilzusammensetzung, welche mindestens ein Diol umfasst;
(c) mindestens ein Monomer, welches eine Lactonfunktion trägt;
(d) einen Katalysator basischer Natur, der den Isocyanatrest zu dimerisieren und/oder zu trimerisieren vermag,
wobei das Verhältnis der Isocyanatfunktionen zu den Alkoholfunktionen mindestens 0,9 beträgt.

2. Zusammensetzung nach Anspruch 1, **dadurch gekennzeichnet, dass** die Isocyanatzusammensetzung mindestens 80 %, bevorzugter mindestens 90 % Isocyanatfunktionen in Form von Molekülen aufweist, die zwei Isocyanatfunktionen - tragen.

3. Zusammensetzung nach den Ansprüchen 1 und 2, **dadurch gekennzeichnet, dass** mindestens 10 % der Isocyanatfunktionen von Dimeren von Diisocyanatonomeren getragen werden.

4. Zusammensetzung nach den Ansprüchen 1 bis 3, **dadurch gekennzeichnet, dass** das Äquivalentverhältnis zwischen einerseits den Lactonfunktionen und andererseits den Alkoholfunktionen mindestens gleich ist dem Verhältnis, das man **dadurch** erhält, dass man 500 durch die Molekülmasse des Monomers oder, wenn davon mehrere vorhanden sind, die durchschnittliche Molekülmasse der Monomerenmischung dividiert.

5. Zusammensetzung nach den Ansprüchen 1 bis 4, **dadurch gekennzeichnet, dass** das Äquivalentverhältnis zwischen den Lactonfunktionen und den Alkoholfunktionen mindestens 10 beträgt.

6. Polykondensationsverfahren, **dadurch gekennzeichnet, dass** man eine Zusammensetzung nach den Ansprüchen 1 bis 5 auf eine Temperatur zwischen Umgebungstemperatur und 100 °C erhitzt.
